# FASCICULE DE BREVET EUROPEEN

(11) **EP 0 608 190 B1**
(45) Date de publication et mention de la délivrance du brevet: **16.07.1997**
(21) Numéro de dépôt: 94440004.3
(22) Date de dépôt: 20.01.1994
(51) Int. Cl.: B65G 67/24, B65G 69/12, B07B 1/28

(54) **Trémie pour charger des granulats**
Trichter zum Laden von Schüttgütern
Hopper for loading granulates

(30) Priorité: 20.01.1993 FR 9300686
(43) Date de publication de la demande: 27.07.1994
(73) Titulaire: MEBI PRODUCTION S.A., 68260 Kingersheim (FR)
(72) Inventeur: Bingler, Albert, 68400 Riedisheim (FR)
(74) Mandataire: Nithardt, Roland

(56) Documents cités:
- DE-A- 2 346 149
- DE-A- 3 305 383
- DE-A- 3 702 422
- DE-A- 4 107 540
- FR-A- 2 067 337
- US-A- 4 998 625

## Description

La présente invention concerne une trémie pour charger des granulats sur un organe de transport, notamment sur une bande transporteuse, comportant un réservoir à granulats de forme allongée, supporté par un châssis inférieur, ledit réservoir étant incliné longitudinalement et pourvu d'ouvertures de distribution au-dessus de l'organe de transport, ledit réservoir étant couvert au moins partiellement par une grille d'arrêt, agencée pour retenir des éléments trop gros, et par une plate-forme carrossable pour un véhicule déversant les granulats sur la grille d'arrêt.

Des trémies de ce genre, dites "semi-parcourables", sont utilisées actuellement dans des carrières, des gravières ou des centrales à béton, pour recevoir des granulats triés ou non et pour les délivrer sur un organe de transport de forme allongée, tel qu'un convoyeur à bande. A cet effet, le fond du réservoir présente généralement des flancs inclinés, conduisant les granulats vers une ouverture allongée ou une rangée d'ouvertures de distribution. La disposition inclinée du réservoir assure une répartition automatique des granulats sur sa longueur et permet donc de les recevoir uniquement au voisinage de l'extrémité la plus haute de la trémie, si bien que la grille d'arrêt peut être limitée à cette zone-là. Pour les véhicules devant déverser les granulats sur cette grille, la manière la plus commode d'accéder à la grille consiste à se placer sur la plate-forme de la trémie, située habituellement dans le prolongement de la grille et recouvrant la partie la plus basse de la trémie, de sorte que la rampe d'accès à prévoir en regard de cette extrémité de la trémie n'a pas besoin d' être particulièrement haute. Toutefois, on peut aussi prévoir de déverser les granulats latéralement sur la grille.

La fonction de la grille d'arrêt est de retenir la fraction des granulats qui dépasse un calibre prédéterminé, c'est-à-dire généralement des blocs ou des grosses pierres, ainsi que d'éventuels corps étrangers de grande taille comme des pièces de bois. Ces éléments trop gros s'accumulent sur la grille et doivent être évacués de temps en temps. Si cette opération doit être effectuée manuellement, elle peut être longue et difficile. Dans d'autres types de trémies, il est connu d'utiliser des grilles basculantes qu'on soulève au moyen d' un dispositif hydraulique jusqu'à une position suffisamment inclinée pour les débarrasser des éléments trop gros. Cependant, une telle solution est difficilement applicable dans une trémie allongée à plate-forme, notamment à cause des difficultés d' implanter un dispositif de levage et à cause de la présence des blocs au voisinage de la plate-forme.

La présente invention a pour but d'éviter les inconvénients mentionnés ci-dessus, en agençant la trémie de manière à pouvoir la débarrasser aisément des éléments retenus par la grille d'arrêt.

A cet effet, l'invention concerne une trémie du genre indiquée plus haut, caractérisée en ce que la grille d'arrêt et la plate-forme carrossable sont montées sur un châssis supérieur basculant, relié au châssis inférieur par au moins une articulation, en ce que ledit châssis supérieur basculant supporte toute une partie supérieure basculante de la trémie, cette partie supérieure comprenant, outre la grille d'arrêt et la plate-forme carrossable des parois de rehaussement disposées le long de celles-ci ainsi qu'une butée disposée à proximité d'une extrémité de ladite plate-forme et empêchant que les roues d'un véhicule atteignent la grille d'arrêt, et en ce que la trémie comporte un dispositif de levage agencé pour soulever le châssis supérieur pour le faire basculer autour de ladite articulation.

De la sorte la trémie peut se composer en pratique de deux parties rigides superposées articulées l'une à l'autre et reliées par un vérin ou un autre moyen de levage et la partie supérieure peut basculer en bloc y compris la grille et la plate-forme, pour déverser les éléments trop gros dans la direction voulue et notamment de côté pour que ceux-ci ne puissent atteindre ni la plate-forme et sa rampe d'accès ni le convoyeur s'éloignant longitudinalement de la trémie.

La grille d'arrêt et la plate-forme carrossable peuvent être disposées sensiblement dans un même plan incliné où la grille se trouve plus haut que la plate-forme. Dans certaines constructions la grille peut être carrossable, c'est-à-dire qu'elle constitue elle-même une plate-forme accessible aux véhicules.

De préférence ladite articulation est disposée longitudinalement le long d'un côté de la trémie pour permettre un basculement latéral du châssis supérieur. La trémie peut comporter une autre articulation disposée longitudinalement le long de l'autre côté de la trémie lesdites articulations étant libérables sélectivement pour permettre un basculement latéral d'un côté ou de l'autre. La trémie peut comporter en outre une articulation transversale entre le châssis supérieur et le châssis inférieur à proximité d'une extrémité d'entrée de la plate-forme.

Dans une forme de réalisation préférée le dispositif de levage se trouve dans le prolongement du réservoir à proximité de l'extrémité la plus basse de celui-ci. De préférence le dispositif de levage comporte un vérin hydraulique se trouvant dans un plan vertical longitudinal médian de la trémie quand le châssis supérieur n'est pas basculé.

Dans une forme particulièrement avantageuse de la trémie selon l'invention au moins un côté du châssis inférieur est recouvert d'une paroi de soutènement susceptible de soutenir un remblai latéral, ladite paroi s' étendant vers le haut au moins approximativement jusqu'audit plan de la grille d'arrêt et de la plate-forme.

Le châssis inférieur peut être pourvu d'au moins deux longerons inférieurs parallèles ayant chacun au moins une extrémité relevée de façon à pouvoir glisser sur le sol.

D'autres caractéristiques et avantages d'une trémie selon l'invention apparaîtront dans la description suivante d'un exemple de réalisation, en référence aux dessins annexés, dans lesquels :
- la figure 1 est une vue schématique en élévation latérale de la trémie,
- la figure 2 est une vue frontale de la trémie, du côté de son extrémité la plus basse, la rampe d'accès étant supprimée pour clarifier le dessin, et
- la figure 3 est une vue schématique en coupe transversale illustrant le fonctionnement de la trémie.

La trémie inclinée de chargement représentée dans les dessins est destinée à recevoir des granulats qui peuvent être amenés par des véhicules qui montent sur la trémie au moyen d'une rampe 1 arrivant à l'extrémité la plus basse de la trémie. Grâce à la disposition allongée et inclinée de la trémie, la hauteur de la rampe 1 est réduite par rapport à une trémie ordinaire de même capacité. La trémie est agencée pour délivrer graduellement les granulats sur un convoyeur à bande transporteuse 2 passant sous elle. La trémie se compose d'une partie inférieure stationnaire et d'une partie supérieure basculante qui repose sur la partie inférieure, les deux parties étant reliées par deux articulations longitudinales 3 et 4 et une articulation transversale 5. Un dispositif de levage comprenant un groupe hydraulique 6 et un vérin hydraulique 7 permet de faire basculer la partie supérieure autour d'une des trois articulations, comme cela sera décrit plus loin.

Pour l'essentiel, la partie inférieure de la trémie est de construction connue. Elle est basée sur un châssis métallique inférieur 8 comprenant notamment une paire de longerons inférieurs 9 et une paire de longerons supérieurs inclinés 10. Chaque longeron inférieur 9 a une extrémité relevée 11 lui donnant une forme de ski qui permet de traîner la trémie sur le sol pour la déplacer s'il le faut. Le coeur de la trémie est constitué par un réservoir 12 allongé et incliné longitudinalement, ayant des parois latérales en tôle pourvues de raidisseurs 13 et un fond étroit pourvu d'une rangée d'orifices de distribution (non représentés). Ces orifices sont obturés ou ouverts sélectivement au moyen d'un obturateur coulissant 14 de type connu. Le convoyeur 2 est également supporté par le châssis 8, par des moyens non représentés.

L'ossature de la partie supérieure de la trémie est formée par un châssis supérieur 16 en forme de cadre rectangulaire, reposant essentiellement sur les longerons 10 du châssis inférieur par l'intermédiaire de supports à chapes, formant les articulations 3, 4 et 5 qui permettent au châssis 16 non seulement de pivoter sur chacune d'elles, mais également de se soulever quand il pivote sur une autre des trois articulations. La zone rectangulaire entourée par le cadre extérieur du châssis 16 est occupée, dans sa partie supérieure, par une grille d'arrêt 17 et dans sa partie inférieure par une plate-forme 18 pour des véhicules, dont les roues sont retenues par une barre transversale de butée 19 située près de l'extrémité supérieure de la plate-forme. Cette barre 19 peut aussi arrêter des blocs retenus par la grille 17. La grille 17 et la plate-forme 18 sont disposées dans un même plan incliné, dans le prolongement de la rampe 1. Sur les côtés et à l'extrémité avant de la trémie, elles sont bordées de parois inclinées 20 et 21, dont certaines peuvent être surélevées par des parois verticales 22.

Dans sa position normale de travail, où le châssis supérieur repose sur les deux longerons 10 du châssis inférieur, la trémie selon l'invention fonctionne de la même manière qu'une trémie connue du même genre. Comme dans les trémies inclinées connues, l'inclinaison du réservoir 12 et la disposition de la grille 17 au voisinage de l'extrémité supérieure du réservoir assurent une répartition automatique des granulats sur toute la longueur du réservoir, au moins au fond de celui-ci, pour les distribuer uniformément sur la bande transporteuse 2. Les granulats peuvent être déversés sur la grille 17 non seulement par des camions ou autres véhicules accédant à la plate-forme 18 par la rampe 1, mais également à partir d'un côté de la trémie, au moyen d'un engin approprié ou au moyen de véhicules circulant sur un remblai latéral 24. A cet effet, le châssis inférieur 8 porte, sur ses côtés ainsi que sur sa face frontale la plus basse, des tôles profilées formant une paroi de soutènement 25 pour retenir le remblai. Certaines de ces parois sont supprimées dans les dessins pour des raisons de clarté. Outre la possibilité de remblayer directement contre la trémie, les parois 25 ont l'avantage d'assurer ainsi une stabilisation de l'ensemble, en particulier lors du basculement latéral.

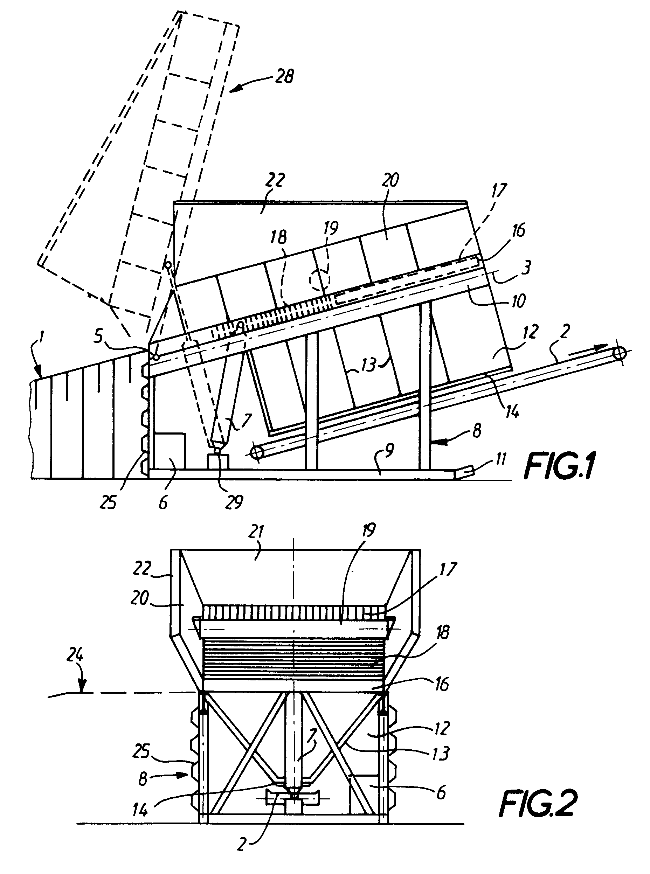

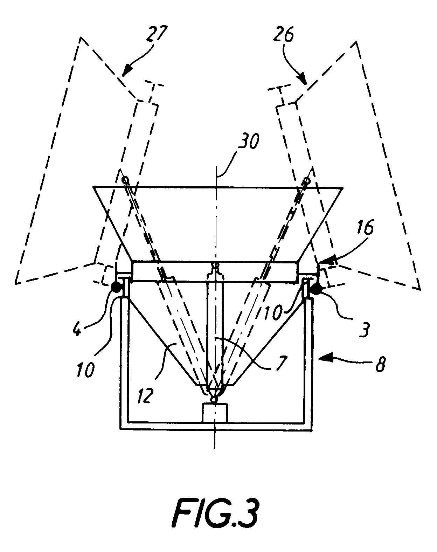

Pour débarrasser la grille 17 des blocs et autres éléments trop gros qu'elle a retenus, on fait basculer en bloc toute la partie supérieure de la trémie autour d'une des articulations 3, 4 et 5 en retenant le châssis supérieur 16 sur cette articulation, à l'aide de verrous non représentés. On a représenté en traits interrompus, dans la figure 3, deux positions 26 et 27 de basculement de la partie supérieure, et dans la figure 1, une position 28 de basculement longitudinal en direction de la rampe d'accès 1. Dans ce dernier cas, il conviendra d'enlever la butée 19. En général le basculement latéral est préféré et s'effectuera toujours du même côté. Les trois possibilités de basculement sont assurées par le même vérin hydraulique, monté sur le châssis inférieur 8 au moyen d'une rotule 29 et attaquant une traverse du châssis supérieur 16. Le vérin 7 est disposé en face de l'extrémité la plus basse du réservoir 12, dans le plan vertical longitudinal médian 30 de la trémie, de même que le groupe hydraulique 6, de sorte qu'il est parfaitement protégé par la plate-forme 18 et les parois de soutènement 25. A la place de l'unique vérin 7, on peut prévoir plusieurs vérins utilisables séparément ou en combinaison pour déterminer différents sens de basculement.

La présente invention n'est pas limitée à la forme de réalisation décrite ci-dessus, mais s'étend à toute modification ou variante évidente pour un homme du métier. En particulier le nombre d'articulations prévues pour le basculement peut être différent et se limiter, par exemple, à une seule articulation.

## Revendications

1. Trémie pour charger des granulats sur un organe de transport, notamment sur une bande transporteuse comportant un réservoir à granulats (12) de forme allongée, supporté par un châssis inférieur (8) ledit réservoir étant incliné longitudinalement et pourvu d' ouvertures de distribution au-dessus de l'organe de transport (2), ledit réservoir étant couvert au moins partiellement par une grille d'arrêt (17) agencée pour retenir des éléments trop gros, et par une plate-forme carrossable (18) pour un véhicule déversant les granulats sur la grille d'arrêt, caractérisée en ce que la grille d'arrêt (17) et la plate-forme carrossable (18) sont montées sur un châssis supérieur basculant (16) relié au châssis inférieur (8) par au moins une articulation (3, 4, 5) , en ce que ledit châssis supérieur basculant (16) supporte toute une partie supérieure basculante de la trémie cette partie supérieure comprenant, outre la grille d'arrêt et la plate-forme carrossable, des parois de rehaussement (20, 21, 22) disposées le long de celles-ci, ainsi qu'une butée (19) disposée à proximité d'une extrémité de ladite plate-forme et empêchant que les roues dudit véhicule atteignent la grille d'arrêt et en ce que la trémie comporte un dispositif de levage (6, 7) agencé pour soulever le châssis supérieur (16) pour le faire basculer autour de ladite articulation.

2. Trémie selon la revendication 1 caractérisée en ce que la grille d'arrêt (17) et la plate-forme carrossable (18) sont disposées sensiblement dans un même plan incliné où la grille se trouve plus haut que la plate-forme.

3. Trémie selon la revendication 1 ou 2, caractérisée en ce que ladite articulation (3, 4) est disposée longitudinalement, le long d'un côté de la trémie pour permettre un basculement latéral du châssis supérieur.

4. Trémie selon la revendication 3, caractérisée en ce qu'elle comporte une autre articulation (4) disposée longitudinalement le long de l'autre côté de la trémie, lesdites articulations (3, 4) étant libérables sélectivement pour permettre un basculement latéral d'un côté ou de l'autre.

5. Trémie selon la revendication 3, caractérisée en ce qu'elle comporte en outre une articulation transversale (5) entre le châssis supérieur (16) et le chassis inférieur (8), à proximité d'une extrémité d'entrée de la plate-forme.

6. Trémie selon la revendication 1, caractérisée en ce que le dispositif de levage (6, 7) se trouve dans le prolongement du réservoir, à proximité de l'extrémité la plus basse de celui-ci.

7. Trémie selon la revendication 6, caractérisée en ce que le dispositif de levage comporte un vérin hydraulique (7) se trouvant dans un plan vertical longitudinal médian (30) de la trémie quand le châssis supérieur n'est pas basculé.

8. Trémie selon la revendication 2, caractérisée en ce qu'au moins un côté du châssis inférieur (8) est recouvert d'une paroi de soutènement (25) susceptible de soutenir un remblai latéral (24), ladite paroi s'étendant vers le haut au moins approximativement jusqu'audit plan de la grille d'arrêt et de la plate-forme.

9. Trémie selon la revendication 1, caractérisée en ce que le châssis inférieur (8) est pourvu d'au moins deux longerons inférieurs parallèles (9) ayant chacun au moins une extrémité relevée (11) de façon à pouvoir glisser sur le sol.

## Claims

1. Hopper for loading granulates onto a conveying facility, in particular onto a conveyor belt, comprising a granulate tank (12) in elongated form, supported by a lower frame (8), said tank being inclined longitudinally and provided with distribution openings above the conveying facility (2), said tank being covered at least partially by a stop grid (17), designed to retain elements which are too big, and by a platform (18) suitable for a vehicle tipping the granulates onto the stop grid, characterised in that the stop grid (17) and the platform suitable for vehicles (18) are mounted on an upper tilting frame (16), connected to the lower frame (8) by at least one articulated joint (3, 4, 5), in that said upper tilting frame (16) supports a whole upper tilting part of the hopper, this upper part comprising, in addition to the stop grid and the platform suitable for vehicles, raising walls (20, 21, 22) set out along the former, as well as a stop (19) located near one end of said platform preventing the wheels of said vehicle from reaching the stop grid, and in that the hopper comprises a lifting device (6, 7) designed to lift the upper frame (16) to make it tilt around said articulated joint.

2. Hopper according to claim 1, characterised in that the stop grid (17) and the platform suitable for vehicles (18) are located significantly in the same inclined plane, where the grid is higher than the platform.

3. Hopper according to claim 1 or 2, characterised in that said articulated joint (3, 4) is arranged longitudinally along one side of the hopper to allow the upper frame to tilt laterally.

4. Hopper according to claim 3, characterised in that it comprises another articulated joint (4) arranged longitudinally along the other side of the hopper, said articulated joints (3, 4) being able to be released selectively to allow lateral tipping to either side.

5. Hopper according to claim 3, characterised in that it further comprises a transversal articulated joint (5) between the upper frame (16) and the lower frame (8) at an inlet end of the platform.

6. Hopper according to claim 1, characterised in that the lifting device (6, 7) is a continuation of the tank, near the lowest end of the latter.

7. Hopper according to claim 6, characterised in that the lifting device comprises a hydraulic jack (7) located in a vertical longitudinal center plane (30) of the hopper when the upper frame is not tilted.

8. Hopper according to claim 2, characterised in that at least one side of the lower frame (8) is covered with a retaining wall (25) capable of supporting a lateral heap (24), said wall extending upwards at least approximately as far as said plane of the stop grid and platform.

9. Hopper according to claim 1, characterised in that the lower frame (8) is provided with at least two parallel lower side rails (9) each of which having at least one raised end (11) so as to be able to slide on the ground.

## Patentansprüche

1. Trichter zum beladen mit Schüttgütern eines Transportorgans, insbesondere eines Förderbandes, bestehend aus einem länglichen, durch ein unteres Gestell (8) getragenen Schüttgut-Behälter (12), wobei der besagte Behälter seiner Länge nach geneigt ist und mit Ausschütt-Öffnungen über dem Transportorgan (2) versehen ist, wobei der besagte Behälter mindestens teilweise durch ein Anhalte-Gitter (17) bedeckt ist, das angeordnet ist, um zu große Elemente anzuhalten, sowie durch eine durch die das Schüttgut in das Anhalte-Gitter abladenden Fahrzeuge befahrbare Plattform (18), gekennzeichnet dadurch daß das Anhalte-Gitter (17) und die befahrbare Plattform (18) auf ein oberes kippfähiges, durch mindestens ein Gelenk (3, 4, 5) an dem unteren Gestell (8) verbundenes Gestell (16) montiert sind, gekennzeichnet dadurch, daß das besagte obere kippfähige Gestell (16) ein ganzes oberes kippfähiges Teil des Trichters trägt, wobei dieses obere Teil, außer dem Anhalte-Gitter und der befahrbaren Plattform, entlang dieser beiden Elemente angebrachte Erhöhungs-Seiten (20, 21, 22) sowie einen in der Nähe eines Endes der Plattform angebrachten Anschlag (19), der verhindert, daß die Räder des besagten Fahrzeuges das Anhalte-Gitter befahren, besitzt, und dadurch, daß der Trichter mit einer Hebevorrichtung (6, 7) ausgestattet ist, die das obere Gestell (16) hebt um es um das besagte Gelenk zu kippen.

2. Trichter gemäß Anspruch 1, gekennzeichnet dadurch, daß das Anhalte-Gitter (17) und die befahrbare Plattform (18) merklich auf einer selben geneigten Fläche angeordnet sind, auf der das Gitter sich höher befindet als die Plattform.

3. Trichter gemäß Anspruch 1 oder 2, gekennzeichnet dadurch, daß das besagte Gelenk (3, 4) längs entlang einer Seite des Trichters angebracht ist, um ein seitliches Kippen des oberen Gestells zu erlauben.

4. Trichter gemäß Anspruch 3, gekennzeichnet dadurch, daß er ein anderes, längs entlang der anderen Seite des Trichters angebrachtes Gelenk (4) besitzt, wobei die besagten Gelenke (3, 4) nach Wahl entriegelbar sind, um das seitliche Kippen nach einer oder der anderen Seite zu erlauben.

5. Trichter gemäß Anspruch 3, gekennzeichnet dadurch, daß er außerdem ein drittes, quer zwischen dem oberen Gestell (16) und dem unteren Gestell (8) angebrachtes Gelenk (5) besitzt, in der Nähe eines Einfahr-Endes der Plattform.

6. Trichter gemäß Anspruch 1, gekennzeichnet dadurch, daß sich die Hebevorrichtung (6, 7) in der Verlängerung des Behälters, in der Nähe des niedrigsten Endes dieses letzten, befindet.

7. Trichter gemäß Anspruch 6, gekennzeichnet dadurch, daß die Hebevorrichtung aus einem hydraulischen Zylinder (6) besteht, der sich in einer senkrechten längs orientierten Mittel-Ebene befindet, wenn das obere Gestell nicht gekippt ist.

8. Trichter gemäß Anspruch 2, gekennzeichnet dadurch, daß mindestens eine Seite des unteren Gestells (8) durch eine Stützwand (25) bedeckt ist, die in der Lage ist, einer seitlichen Aufschüttung (24) standzuhalten, wobei sich die besagte Wand mindestens bis ungefähr zur Höhe der besagten Anhalte-Gitter- un Plattform-Ebene ragt.

9. Trichter gemäß Anspruch 1, gekennzeichnet dadurch, daß das untere Gestell (8) mit mindestens zwei unteren parallelen Längsträgem (9) versehen ist, die beide mindestens ein angehobenes Ende (11) besitzen um auf dem Boden gleiten zu können.
